# EUROPÄISCHE PATENTSCHRIFT

(11) **EP 2 886 388 B1**
(45) Veröffentlichungstag und Bekanntmachung des Hinweises auf die Patenterteilung: **02.06.2021**
(21) Anmeldenummer: 14195755.5
(22) Anmeldetag: 02.12.2014
(51) Int. Cl.: B60L 53/80, B60L 53/65, B60L 58/10

(54) **Steuerungsverfahren für eine Traktionsbatterie**
Control method for a traction battery
Procédé de commande pour une batterie de propulsion

(30) Priorität: 23.12.2013 DE 102013114777
(43) Veröffentlichungstag der Anmeldung: 24.06.2015
(73) Patentinhaber: Linde Material Handling GmbH, 63743 Aschaffenburg (DE)
(72) Erfinder: Häcker, Berthold, 63864 Glattbach (DE); Espinoza, Fernando, 63741 Aschaffenburg (DE)
(74) Vertreter: Patentship Patentanwaltsgesellschaft mbH

(56) Entgegenhaltungen:
- EP-A2- 2 517 922
- DE-A1-102011 107 055
- US-A1- 2013 304 287

## Beschreibung

Die Erfindung betrifft ein Steuerungsverfahren für eine Traktionsbatterie einer mobilen Arbeitsmaschine. Insbesondere betrifft die Erfindung ein Steuerungsverfahren für eine als Hochleistungsbatterie ausgebildete Traktionsbatterie für eine mobile Arbeitsmaschine, wobei die Traktionsbatterie Leistungsanschlüsse, von denen von einem Batteriemanagementsystem der Traktionsbatterie mindestens ein Leistungsanschluss durch eine Schaltvorrichtung spannungsfrei geschaltet werden kann, und eine Kommunikationsverbindung zur Verbindung mit einer Steuerung eines Anschlusspartners der Traktionsbatterie aufweist, wobei das Batteriemanagementsystem mit der Hochleistungsbatterie zu einer Einheit integriert und in diese fest eingebaut ist und durch das Batteriemanagementsystem die Leistungsanschlüsse spannungsfrei geschaltet sind, wenn die Traktionsbatterie nicht betrieben wird. Weiterhin betrifft die Erfindung auch eine entsprechende Traktionsbatterie sowie eine mobile Arbeitsmaschine.

Für den Betrieb von batterie-elektrisch angetriebenen mobilen Arbeitsmaschinen, insbesondere Flurförderzeugen, wie etwa beispielsweise Gabelstaplern, kommen Traktionsbatterien zum Einsatz, die im Regelfall als austauschbare Batterien in ein Batteriefach eingesetzt werden können und, sobald Sie entladen sind, gegen eine aufgeladene Traktionsbatterie ersetzt werden können. Bisher sind solche Traktionsbatterien im Regelfall Blei-Säureakkumulatoren bzw. Blei-Säurebatterien, bei denen eine chemische Reaktion zwischen Schwefelsäure und Blei zur Speicherung der elektrischen Energie dient. Die Traktionsbatterie wird dabei beim Auswechseln über zumeist genormte Batteriestecker mit dem Flurförderzeug verbunden. Diese Batteriestecker verbinden dabei die Leistungsanschlüsse der Batterie mit einem entsprechenden Gegenstecker des Flurförderzeugs, über die die Spannungsversorgung des gesamten Flurförderzeugs erfolgt. Üblicherweise liegt an dem Batteriestecker bzw. den Leistungsanschlüssen andauernd die Batteriespannung an und lässt sich bei Blei-Säurebatterien im Regelfall auch nicht abschalten.

Durch neuere Technologien können inzwischen Batterien bzw. Akkumulatoren hergestellt werden und auch im industriellen Einsatz verwendet werden, die bessere Leistungsdaten bieten. Solche Batterien kann man als Hochleistungsbatterien bezeichnen, die sich dadurch auszeichnen, dass sie gegenüber einer Blei-Säurebatterie eine höhere Energiedichte in Bezug auf Gewicht und/oder Volumen aufweisen und eine andere Technik als eine Blei-Säure-Reaktion für die Energiespeicherung nutzen. Hinzu kommt bei vielen Hochleistungsbatterien als Merkmal, dass eine große Leistung beim Entladen abgegeben werden kann und/oder mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Bereits Nickel-Cadmium Batterien weisen zwar keinen erheblichen Gewichtsvorteil auf, haben jedoch eine höhere Energiedichte in Bezug auf das Volumen. Weitere bekannte Technologien für Akkumulatoren bzw. wieder aufladbare Batterien unter Einsatz von Nickel sind beispielsweise Nickel-Metallhydrid, Nickel-Eisen, Nickel-Wasserstoff, Nickel-Zink und Silber-Zink. Daneben sind auch Natrium-Nickelchlorid und Natrium-Schwefel Akkumulatoren bekannt.

Zunehmend in größerem Umfang eingesetzt werden jedoch Lithium-Ionenbatterien, die eine in Serie anwendbare Zuverlässigkeit erreicht haben, sich durch hohe Energiedichte auszeichnen und nur einem geringen Memoryeffekt unterliegen sowie ein Entladen der Batterie bzw. Aufladen der Batterie mit großer Leistung ermöglichen. Bei der Lithium-Ionenbatterie sind ebenfalls unterschiedliche Technologien bekannt, wie beispielsweise Lithium-Polymer, Lithium-Kobaltdioxid, Lithium-Luft, Lithium-Titanat, Lithium-Eisenphosphat, Lithium-Mangan und Zinn-Schwefel-Lithiumionen.

Besonders vorteilhaft ist der Einsatz solcher Hochleistungsbatterien bei Fahrzeugen und beispielsweise Flurförderzeugen, da aufgrund der hohen Energiedichte in Bezug auf das Volumen bei dem vorgegebenen Bauraum für die Batterie eine größere Menge elektrische Energie gespeichert werden kann und somit die Reichweite eines Fahrzeugs bzw. die Einsatzdauer des Flurförderzeugs vergrößert werden kann.

Bei solchen Hochleistungsbatterien sind zusätzliche Sicherheitsmaßnahmen und Maßnahmen zur Regelung im Betrieb erforderlich. Es werden daher Überwachungs- und Steuerungsvorrichtungen vorgesehen, die unter dem Begriff Batteriemanagementsystem zusammengefasst werden. Dieses Batteriemanagementsystem überwacht den Zustand einzelner Batteriezellen bzw. Module, die aus einer oder mehrerer Batteriezellen bestehen, sowie steuert während des Ladens wie auch des Entladens der Hochleistungsbatterie die Funktionen der Batterie. Dabei wird das Batteriemanagementsystem mit der Hochleistungsbatterie zu einer Einheit integriert und in diese fest eingebaut.

Dabei ist bekannt, das Batteriemanagementsystem über eine Datenkommunikationsverbindung mit einem Steuergerät eines Flurförderzeugs, aber auch eines Ladegerätes zu verbinden. Über diese Kommunikationsverbindung kann dann ein Datenaustausch stattfinden. Ein Beispiel für eine solche Kommunikationsverbindung ist dabei ein Bus-System wie etwa der CAN-Bus.

Bei Hochleistungsbatterien ist ein unbeabsichtigtes Kurzschließen der Leistungsanschlüsse in größerem Ausmaße als bei einer Blei-Säurebatterien schädlich aufgrund der hohen Leistungsdichte wie auch der erhöhten Gefahr einer inneren Beschädigung der Hochleistungsbatterie. Daher ist es aus Sicherheitsgründen wünschenswert und verlängert im Übrigen die Lebensdauer, wenn die Spannung an den Leistungsanschlüssen des Batteriesteckers abgeschaltet werden kann. Es ist daher bekannt, eine Lithium-Ionenbatterie für ein Flurförderzeug so auszuführen, dass die Traktionsbatterie eine Steuervorrichtung aufweist, beispielsweise einen Batterieschütz, mit dem mindestens einer der beiden Leistungsanschlüsse oder beide Leistungsanschlüsse geschaltet werden können, um die Leistungsanschlüsse spannungsfrei zu schalten.

Nachteilig an diesem Stand der Technik ist, dass es beim Einsatz von Hochleistungsbatterien in hierfür nicht vorgesehenen Flurförderzeugen zu Beschädigungen kommen kann, die auch das Batteriemanagementsystem nicht verhindern kann. Ebenso können Schäden oder unzulässig hohe Beanspruchungen der Traktionsbatterie auftreten beim Einsatz eines nicht geeigneten Ladegeräts.

Aus der EP 2 517 922 A2 ist eine Lithium-Ionenbatterie mit einem Batteriemanagementsystem und einem Batterieschütz bekannt.

Der vorliegenden Erfindung liegt die Aufgabe zugrunde, ein Steuerungsverfahren für eine Hochleistungsbatterie als Traktionsbatterie für ein Flurförderzeug zur Verfügung zu stellen, das die zuvor genannten Nachteile vermeidet und einen sicheren und einfachen Einsatz von Hochleistungsbatterien als Traktionsbatterie erlaubt.

Diese Aufgabe wird durch ein Steuerungsverfahren mit den Merkmalen des unabhängigen Patentanspruchs 1 sowie eine Traktionsbatterie mit den Merkmalen des Patentanspruchs 8 sowie eine mobile Arbeitsmaschine mit den Merkmalen des Patentanspruchs 9 gelöst. Vorteilhafte Weiterbildungen der Erfindung sind in den Unteransprüchen angegeben.

Die Aufgabe wird erfindungsgemäß dadurch gelöst, dass bei einem Verfahren einem Steuerungsverfahren für eine als Hochleistungsbatterie ausgebildete Traktionsbatterie für eine mobile Arbeitsmaschine, wobei die Traktionsbatterie Leistungsanschlüsse, von denen von einem Batteriemanagementsystem der Traktionsbatterie mindestens ein Leistungsanschluss durch eine Schaltvorrichtung spannungsfrei geschaltet werden kann, und eine Kommunikationsverbindung zur Verbindung mit einer Steuerung eines Anschlusspartners der Traktionsbatterie aufweist, wobei das Batteriemanagementsystem mit der Hochleistungsbatterie zu einer Einheit integriert, in diese fest eingebaut ist und durch das Batteriemanagementsystem die Leistungsanschlüsse spannungsfrei geschaltet sind, wenn die Traktionsbatterie nicht betrieben wird, ein Überprüfen der Kommunikationsverbindung auf Identifikationsdaten durch das Batteriemanagementsystem, wobei die Identifikationsdaten Daten sind, aus denen eine eindeutige Identifizierung des jeweiligen Anschlusspartners oder eine eindeutige Identifizierung der zulässigen Kombination aus Traktionsbatterie und Anschlusspartner ermöglicht wird, ein Vergleichen der Identifikationsdaten mit abgespeicherten Vergleichsdaten zulässiger Anschlusspartner durch das Batteriemanagementsystem und ein Einschalten der Leistungsanschlüsse über die Schaltvorrichtung durch das Batteriemanagementsystem im Falle eines zulässigen Anschlusspartners erfolgt.

Vorteilhaft stellt dadurch die Traktionsbatterie selbst durch das Batteriemanagementsystem sicher, dass nur eine geeignete Paarung aus Traktionsbatterie als Hochleistungsbatterie sowie dem jeweiligen Anschlusspartner zum Einsatz kommen kann. Der Anschlusspartner kann dabei ein Flurförderzeug sein, bei dem die Traktionsbatterie in ein Batteriefach eingesetzt zur Energieversorgung dient und entladen wird. Die zweite Möglichkeit eines Anschlusspartners ist ein Ladegerät beim Aufladen der Traktionsbatterie. Es kann auch eine Kombination zum Einsatz kommen, etwa bei einem in ein Flurförderzeug integrierten, fest eingebauten Ladegerät. Vorteilhaft werden Beschädigungen vermieden, die durch ein ungeeignetes Entladen oder Aufladen der Traktionsbatterie auftreten können. Indem das Batteriemanagementsystem die Hochleistungsbatterie bzw. Traktionsbatterie erst in Betrieb nimmt und durch die Schaltvorrichtung die Leistungsanschlüsse anschaltet, wenn eine geeignete Kombination mit einem Anschlusspartner sichergestellt ist, wird auch verhindert, dass durch Manipulationen oder ähnliches die geforderte, korrekte Verwendung der Traktionsbatterie umgangen wird. Die Schaltvorrichtung kann dabei ein Batterieschütz sein, der einen der beiden Leistungsanschlüsse oder beide, somit sowohl den Pluspol als auch den Minuspol, schaltet. Dabei schaltet das Batteriemanagementsystem selbstständig direkt nach einer Identifizierung des Anschlusspartners als zulässig anhand der Identifikationsdaten die Traktionsbatterie durch die Schaltvorrichtung an.

Vorteilhaft ist der Anschlusspartner eine mobile Arbeitsmaschine, insbesondere ein Flurförderzeug.

In einer günstigen Ausgestaltung kann der Anschlusspartner ein Ladegerät sein.

Die Kommunikationsverbindung kann ein Bussystem sein, insbesondere ein CAN-Bus.

In einer vorteilhaften Weiterbildung des Steuerungsverfahren umfassen die Identifikationsdaten eine oder mehrere der folgenden Informationen: einen Identifizierungscode und/oder eine Gerätebezeichnung und/oder eine Nennspannung und/oder Leistungsdaten und/oder geometrische Abmessungen der Traktionsbatterie und/oder eine Seriennummer der Traktionsbatterie und/oder eine Seriennummer des Anschlusspartners.

Die Identifikationsdaten können grundsätzlich alle Art von Informationen und Daten sein, aus denen eine eindeutige Identifizierung des jeweiligen Anschlusspartners, somit eines Flurförderzeugs oder Ladegeräts, bzw. eine eindeutige Identifizierung der zulässigen Kombination aus Traktionsbatterie und Anschlusspartner möglich ist. Dies können einzeln oder in beliebiger, geeigneter Kombination zum einen die Leistungsdaten sein wie Spannung, abgegebener oder aufgenommener maximaler Strom, aber auch direkte Identifikationsdaten wie Typenbezeichnungen, Seriennummern oder eine frei gewählte Identifikationsnummer. Dabei können sowohl Daten übertragen werden, durch die das Batteriemanagementsystem den Anschlusspartner identifiziert, als auch Daten, durch die dem Batteriemanagementsystem eine zulässige Traktionsbatterie mitgeteilt wird und dieses die Übereinstimmung mit der eigenen Traktionsbatterie erkennt. Es ist auch denkbar, eine Kombination mit bisher nicht bekannten Anschlusspartner zuzulassen, wenn deren Eigenschaften so umfassend durch die Identifikationsdaten beschrieben werden, dass ein möglicher Betrieb als sicher und zulässig gewährleistet und eingeschätzt werden kann.

In einer günstigen Ausgestaltung passt das Batteriemanagementsystem einen maximalen Strom anhand der Identifikationsdaten an den Anschlusspartner an.

Durch das Batteriemanagementsystem können auch anhand der Identifikationsdaten Einschränkungen und Limitierungen angepasst an den jeweiligen Anschlusspartner vorgenommen werden. Insbesondere betrifft das eine Begrenzung des maximalen Stroms.

Vorteilhaft schaltet das Batteriemanagementsystem bei einer Unterbrechung der Kommunikationsverbindung die Leistungsanschlüsse über die Schaltvorrichtung spannungsfrei.

Dadurch wird die Sicherheit des Betriebs erhöht, indem im Fall einer unbeabsichtigten Unterbrechung die Traktionsbatterie abgeschaltet wird.

In einer bevorzugten Ausgestaltung des Steuerungsverfahrens ist die Hochleistungsbatterie eine Lithium-Ionenbatterie.

Die Aufgabe wird auch gelöst durch eine Traktionsbatterie, die als Hochleistungsbatterie ausgebildet ist, mit Leistungsanschlüssen und einem Batteriemanagementsystem, das mit der Hochleistungsbatterie zu einer Einheit integriert, in diese fest eingebaut ist und mindestens einen Leistungsanschluss durch eine Schaltvorrichtung spannungsfrei schalten kann, und mit eine Kommunikationsverbindung zur Verbindung mit einer Steuerung eines Anschlusspartners der Traktionsbatterie, wobei durch das Batteriemanagementsystem ein zuvor beschriebenes Steuerungsverfahren durchführt.

Die Traktionsbatterie weist die bereits beschriebenen Vorteile des Steuerungsverfahrens auf.

Weiterhin wird die Aufgabe auch gelöst durch einen Anschlusspartner für eine zuvor beschriebene Traktionsbatterie, insbesondere eine mobile Arbeitsmaschine oder ein Ladegerät, mit einer Kommunikationsverbindung und einer Steuerung, die Identifikationsdaten über die Kommunikationsverbindung übermittelt.

Es ist auch denkbar, dass für das Einschalten der Traktionsbatterie über das Kommunikationsmittel von dem Anschlusspartner, insbesondere einem Flurförderzeug oder Ladegerät, ein Steuerbefehl erfolgt. Dieser Steuerbefehl wird dann nur durch das Batteriemanagementsystem ausgeführt, wenn zuvor durch die Überprüfung der Identifikationsdaten festgestellt wurde, dass ein zulässiger Anschlusspartner vorhanden ist.

Es kann auch umgekehrt eine Identifikation der Traktionsbatterie durch den Anschlusspartner über Identifikationsdaten erfolgen, die über die Kommunikationsverbindung übertragen werden. So kann etwa ein Flurförderzeug oder ein Ladegerät die Traktionsbatterie als einen zulässigen Anschlusspartner identifizieren. Dies kann unabhängig davon erfolgen, ob auch die Traktionsbatterie eine Schaltvorrichtung aufweist, eine Identifizierung vornimmt oder die weiteren zuvor beschriebenen Merkmale der Traktionsbatterie bzw. des beschriebenen Steuerungsverfahren vorhanden sind. Es ist einzig und allein erforderlich, dass das Batteriemanagementsystem über eine Kommunikationsverbindung Identifikationsdaten überträgt, wobei diese Identifikationsdaten alle zuvor beschriebenen Arten von Identifikationsdaten sein können.

Weitere Vorteile und Einzelheiten der Erfindung werden anhand der in den schematischen Figuren dargestellten Ausführungsbeispiele näher erläutert. Hierbei zeigt
- Fig. 1: schematisch eine in ein Flurförderzeug eingesetzte Traktionsbatterie, bei der das erfindungsgemäße Steuerungsverfahren durchgeführt wird, und
- Fig. 2: schematisch den Ablauf des erfindungsgemäßen Steuerungsverfahren.

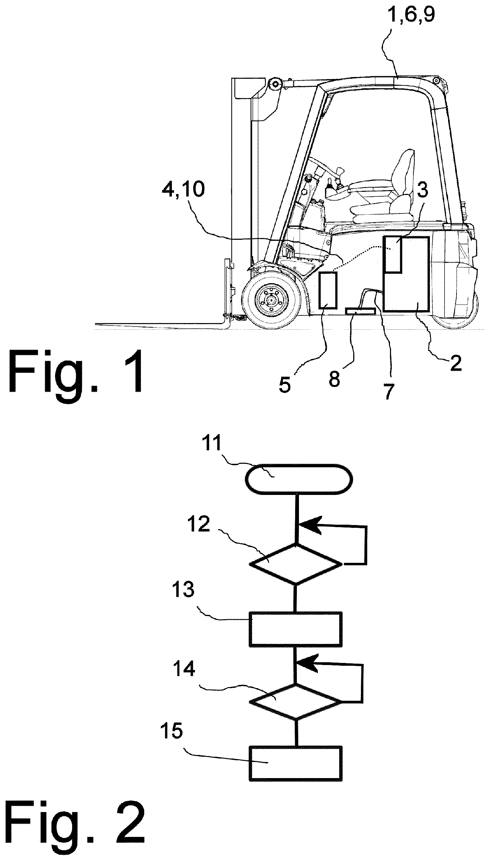

Die Fig. 1 zeigt schematisch eine in ein Flurförderzeug 1 eingesetzte Traktionsbatterie 2, bei der das erfindungsgemäße Steuerungsverfahren durchgeführt wird. Die Traktionsbatterie 1 weist ein Batteriemanagementsystem 3 auf, das über eine Kommunikationsverbindung 4 mit einer Steuerung 5 des Flurförderzeugs 1 als Anschlusspartner 6 verbunden ist. Über Leistungsanschlüsse 7 und eine nicht dargestellte Batteriesteckverbindung ist die Traktionsbatterie 2 mit einem Stromverteiler 8 des Flurförderzeugs 1, das als Gegengewichtsgabelstapler 9 ausgeführt ist, verbunden. Die Leistungsanschlüsse 7 können über eine nicht dargestellte Schaltvorrichtung von dem Batteriemanagementsystem 3 spannungslos geschaltet werden. Die Kommunikationsverbindung 4 erfolgt bei dem hier dargestellten Ausführungsbeispiel in Form eines CAN-Busses 10.

Die Fig. 2 zeigt schematisch den Ablauf des erfindungsgemäßen Steuerungsverfahrens. Zu Beginn 11 des Steuerungsverfahrens sind die Leistungsanschlüsse 7 durch die Schaltvorrichtung spannungsfrei geschaltet. In einer Abfrage 12 überprüft das Batteriemanagementsystem, ob Identifikationsdaten über die Kommunikationsverbindung 4 übertragen werden und vergleicht diese mit abgespeicherten Vergleichsdaten zulässiger Anschlusspartner 6. Diese Abfrage wird solange wiederholt, bis ein zulässiger Anschlusspartner 6 erkannt wird. In diesem Fall wird in dem Schritt 13 die Schaltvorrichtung betätigt und die Traktionsbatterie 2 eingeschaltet. Während des Betriebs erfolgt eine weitere Abfrage 14, ob die Kommunikationsverbindung 4 noch besteht, in dem hier vorliegenden Ausführungsbeispiel, ob der CAN-Bus noch verbunden ist. Wenn eine Unterbrechung der Kommunikationsverbindung 4 erkannt wird, erfolgt in Schritt 15 eine Abschaltung der Leistungsanschlüsse 7 durch die Schaltvorrichtung.

## Patentansprüche

1. Steuerungsverfahren für eine als Hochleistungsbatterie ausgebildete Traktionsbatterie (2) für eine mobile Arbeitsmaschine, wobei die Traktionsbatterie (2) Leistungsanschlüsse (7), von denen von einem Batteriemanagementsystem (3) der Traktionsbatterie (2) mindestens ein Leistungsanschluss (7) durch eine Schaltvorrichtung spannungsfrei geschaltet werden kann, und eine Kommunikationsverbindung (4) zur Verbindung mit einer Steuerung (5) eines Anschlusspartners (6) der Traktionsbatterie (2) aufweist, wobei das Batteriemanagementsystem (3) mit der Hochleistungsbatterie zu einer Einheit integriert, in diese fest eingebaut ist und durch das Batteriemanagementsystem (3) die Leistungsanschlüsse (7) spannungsfrei geschaltet sind, wenn die Traktionsbatterie (2) nicht betrieben wird,
**gekennzeichnet durch** die Schritte:
- Überprüfen der Kommunikationsverbindung (4) auf Identifikationsdaten durch das Batteriemanagementsystem (3), wobei die Identifikationsdaten Daten sind, aus denen eine eindeutige Identifizierung des jeweiligen Anschlusspartners oder eine eindeutige Identifizierung der zulässigen Kombination aus Traktionsbatterie und Anschlusspartner ermöglicht wird,
- Vergleichen der Identifikationsdaten mit abgespeicherten Vergleichsdaten zulässiger Anschlusspartner (6) durch das Batteriemanagementsystem (3) und
- Einschalten der Leistungsanschlüsse (7) über die Schaltvorrichtung durch das Batteriemanagementsystem (3) im Falle eines zulässigen Anschlusspartners (6).

2. Steuerungsverfahren nach Anspruch 1,
**dadurch gekennzeichnet,**
**dass** der Anschlusspartner (6) eine mobile Arbeitsmaschine, insbesondere ein Flurförderzeug (1) ist.

3. Steuerungsverfahren nach Anspruch 1 oder 2,
**dadurch gekennzeichnet,**
**dass** der Anschlusspartner (6) ein Ladegerät ist.

4. Steuerungsverfahren nach einem der Ansprüche 1 bis 3,
**dadurch gekennzeichnet,**
**dass** die Kommunikationsverbindung (4) ein Bussystem ist, insbesondere ein CAN-Bus (10).

5. Steuerungsverfahren nach einem der Ansprüche 1 bis 4,
**dadurch gekennzeichnet,**
**dass** die Identifikationsdaten eine oder mehrere der folgenden Informationen umfassen:
- einen Identifizierungscode;
- eine Gerätebezeichnung;
- eine Nennspannung;
- Leistungsdaten;
- geometrische Abmessungen der Traktionsbatterie (2);
- eine Seriennummer der Traktionsbatterie (2);
- eine Seriennummer des Anschlusspartners (6);

6. Steuerungsverfahren nach einem der Ansprüche 1 bis 5,
**dadurch gekennzeichnet,**
**dass** das Batteriemanagementsystem (3) bei einer Unterbrechung der Kommunikationsverbindung (4) die Leistungsanschlüsse (7) über die Schaltvorrichtung spannungsfrei schaltet.

7. Steuerungsverfahren nach einem der Ansprüche 1 bis 6,
**dadurch gekennzeichnet,**
**dass** die Hochleistungsbatterie eine Lithium-Ionenbatterie ist.

8. Traktionsbatterie, die als Hochleistungsbatterie ausgebildet ist, mit Leistungsanschlüssen (7) und einem Batteriemanagementsystem (3), das mit der Hochleistungsbatterie zu einer Einheit integriert, in diese fest eingebaut ist und mindestens einen Leistungsanschluss (7) durch eine Schaltvorrichtung spannungsfrei schalten kann, und mit eine Kommunikationsverbindung (4) zur Verbindung mit einer Steuerung (5) eines Anschlusspartners (6) der Traktionsbatterie (2), wobei durch das Batteriemanagementsystem (3) ein Steuerungsverfahren nach einem der vorhergehenden Ansprüche durchgeführt wird.

9. System aus einer Traktionsbatterie nach Anspruch 8 und einem Anschlusspartner, insbesondere eine mobile Arbeitsmaschine oder ein Ladegerät, wobei der Anschlusspartner mit einer Kommunikationsverbindung und mit einer Steuerung ausgestattet ist, die Identifikationsdaten über die Kommunikationsverbindung übermittelt.

## Claims

1. Control method for a traction battery (2), which is configured as a high-power battery, for a mobile working machine, wherein the traction battery (2) has power connections (7), of which at least one power connection (7) can be switched by way of a switching device to zero voltage by a battery management system (3) of the traction battery (2), and a communication link (4) for linking to a controller (5) of a connection partner (6) of the traction battery (2), wherein the battery management system (3) is integrated with the high-power battery to form one unit, is fixedly incorporated therein and the power connections (7) are switched to zero voltage by the battery management system (3) when the traction battery (2) is not operated,
**characterized by** the steps of:
- checking the communication link (4) for identification data by way of the battery management system (3), wherein the identification data are data from which a clear identification of the respective connection partner or a clear identification of the permissible combination of traction battery and connection partner is made possible,
- comparing the identification data with stored comparison data of permissible connection partners (6) by way of the battery management system (3) and
- switching on the power connections (7) by means of the switching device by way of the battery management system (3) in the case of a permissible connection partner (6).

2. Control method according to Claim 1,
**characterized in that**
the connection partner (6) is a mobile working machine, in particular an industrial truck (1).

3. Control method according to Claim 1 or 2, **characterized in that**
the connection partner (6) is a charging device.

4. Control method according to one of Claims 1 to 3, **characterized in that**
the communication link (4) is a bus system, in particular a CAN bus (10).

5. Control method according to one of Claims 1 to 4, **characterized in that**
the identification data comprise one or more of the following pieces of information:
- an identification code;
- a device name;
- a rated voltage;
- performance data;
- geometric dimensions of the traction battery (2);
- a serial number of the traction battery (2);
- a serial number of the connection partner (6).

6. Control method according to one of Claims 1 to 5, **characterized in that**
the battery management system (3) switches the power connections (7) to zero voltage by means of the switching device when the communication link (4) is interrupted.

7. Control method according to one of Claims 1 to 6, **characterized in that**
the high-power battery is a lithium-ion battery.

8. Traction battery, which is configured as a high-power battery, having power connections (7) and a battery management system (3), which is integrated with the high-powered battery to form one unit, is fixedly incorporated therein and can switch at least one power connection (7) to zero voltage by way of a switching device, and having a communication link (4) for linking with a controller (5) of a connection partner (6) of the traction battery (2), wherein a control method according to one of the preceding claims is carried out by way of the battery management system (3).

9. System composed of a traction battery according to Claim 8 and a connection partner, in particular a mobile working machine or a charging device, wherein the connection partner is provided with a communication link and with a controller that transmits identification data via the communication link.

## Revendications

1. Procédé de commande destiné à une batterie de traction (2) réalisée sous la forme d'une batterie haute performance pour une machine de travail mobile, la batterie de traction (2) présentant des bornes de puissance (7), dont au moins une borne de puissance (7) peut être mise hors tension par un système de gestion de batterie (3) de la batterie de traction (2) par l'intermédiaire d'un dispositif de commutation, et une liaison de communication (4) pour une liaison avec un dispositif de commande (5) d'un élément de connexion (6) de la batterie de traction (2), dans lequel le système de gestion de batterie (3) est intégré avec la batterie haute performance pour former une unité, est installé de manière fixe dans celle-ci, et le système de gestion de batterie (3) met les bornes de puissance (7) hors tension lorsque la batterie de traction (2) n'est pas exploitée,
**caractérisé par** les étapes consistant à :
- vérifier, par le système de gestion de batterie (3), la liaison de communication (4) quant à des données d'identification, les données d'identification étant des données permettant une identification univoque de l'élément de connexion respectif ou une identification univoque de la combinaison admissible de la batterie de traction et de l'élément de connexion,
- comparer, par le système de gestion de batterie (3), les données d'identification avec des données de comparaison stockées pour des éléments de connexion (6) admissibles, et
- mettre sous tension, par le système de gestion de batterie (3), les bornes de puissance (7) par l'intermédiaire du dispositif de commutation dans le cas d'un élément de connexion (6) admissible.

2. Procédé de commande selon la revendication 1, **caractérisé en ce que** l'élément de connexion (6) est une machine de travail mobile, en particulier un chariot de manutention (1).

3. Procédé de commande selon la revendication 1 ou 2, **caractérisé en ce que** l'élément de connexion (6) est un chargeur.

4. Procédé de commande selon l'une quelconque des revendications 1 à 3, **caractérisé en ce que** la liaison de communication (4) est un système de bus, en particulier un bus CAN (10).

5. Procédé de commande selon l'une quelconque des revendications 1 à 4, **caractérisé en ce que** les données d'identification comprennent une ou plusieurs des informations suivantes :
- un code d'identification ;
- une désignation d'appareil ;
- une tension nominale ;
- des données de puissance ;
- des dimensions géométriques de la batterie de traction (2) ;
- un numéro de série de la batterie de traction (2) ;
- un numéro de série de l'élément de connexion (6) .

6. Procédé de commande selon l'une quelconque des revendications 1 à 5, **caractérisé en ce qu'**en cas de coupure de la liaison de communication (4), le système de gestion de batterie (3) met les bornes de puissance (7) hors tension par l'intermédiaire du dispositif de commutation.

7. Procédé de commande selon l'une quelconque des revendications 1 à 6, **caractérisé en ce que** la batterie haute performance est une batterie lithium-ion.

8. Batterie de traction, réalisée sous la forme d'une batterie haute performance, comprenant des bornes de puissance (7) et un système de gestion de batterie (3) qui est intégré avec la batterie haute performance pour former une unité, est installé de manière fixe dans celle-ci, et peut mettre hors tension au moins une borne de puissance (7) par l'intermédiaire d'un dispositif de commutation, et comprenant une liaison de communication (4) pour une liaison avec un dispositif de commande (5) d'un élément de connexion (6) de la batterie de traction (2), le système de gestion de batterie (3) effectuant un procédé de commande selon l'une quelconque des revendications précédentes.

9. Système composé d'une batterie de traction selon la revendication 8 et d'un élément de connexion, en particulier d'une machine de travail mobile ou d'un chargeur, l'élément de connexion étant équipé d'une liaison de communication et d'un dispositif de commande qui transmet des données d'identification par la liaison de communication.
